# EUROPÄISCHE PATENTSCHRIFT

(11) **EP 4 320 491 B1**
(45) Veröffentlichungstag und Bekanntmachung des Hinweises auf die Patenterteilung: **13.11.2024**
(21) Anmeldenummer: 22727153.3
(22) Anmeldetag: 04.05.2022
(51) Int. Cl.: G05B 19/042, G06F 21/52, G05B 21/00, G05B 19/418, H04L 67/12

(54) **VERFAHREN UND SYSTEM ZUR GESICHERTEN AUSFÜHRUNG VON STEUERUNGSANWENDUNGEN UND ÜBERPRÜFUNGSEINRICHTUNG**
METHOD AND SYSTEM FOR SECURE EXECUTION OF CONTROL APPLICATIONS AND VERIFICATION DEVICE
PROCÉDÉ ET SYSTÈME D'EXÉCUTION SÉCURISÉE D'APPLICATIONS DE COMMANDE ET DISPOSITIF DE VÉRIFICATION

(30) Priorität: 26.05.2021 EP 21175999
(43) Veröffentlichungstag der Anmeldung: 14.02.2024
(73) Patentinhaber: Siemens Aktiengesellschaft, 80333 München (DE)
(72) Erfinder: FALK, Rainer, 85586 Poing (DE); FEIST, Christian Peter, 80689 München (DE); PFAU, Axel, 80333 München (DE); PYKA, Stefan, 85570 Markt Schwaben (DE); SCHNEIDER, Daniel, 80796 München (DE); SPERL, Franz, 92526 Oberviechtach (DE)
(74) Vertreter: Siemens Patent Attorneys
(86) Internationale Anmeldenummer: PCT/EP2022/061992
(87) Internationale Veröffentlichungsnummer: WO 2022/248180

(56) Entgegenhaltungen:
- EP-A1- 3 428 756
- EP-A1- 3 699 705
- EP-A1- 3 869 367
- WO-A1-2014/109645
- WO-A1-2016/089416
- WO-A1-2020/182627

## Beschreibung

Die vorliegende Erfindung betrifft ein Verfahren und System zur gesicherten Ausführung von Steuerungsanwendungen, insbesondere innerhalb eines industriellen Automatisierungssystems, und eine Überprüfungseinrichtung. Das System und die Überprüfungseinrichtung sind zur Durchführung des erfindungsgemäßen Verfahrens vorgesehen.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung oder einer anderen Automatisierungsdomäne zur Steuerung, Regelung oder Überwachung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

WO 2014/109645 A1 betrifft ein Verfahren zum Überwachen eines industriellen Steuerungssystems, bei dem Daten von einer oder mehreren Quellen außerhalb des industriellen Steuerungssystems gesammelt werden. Des Weiteren werden Daten aus einer oder mehreren internen Quellen des industriellen Steuerungssystems gesammelt. Darüber hinaus werden die Daten aggregiert, die von den internen Quellen oder von den externen Quellen gesammelt wurden. Die gesammelten Daten werden außerdem durch Korrelation mit zuvor gesammelten Daten analysiert, um auf diese Weise einen Sicherheitszustand des industriellen Steuerungssystems zu überwachen.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

Aus WO 2020/212051 A1 ist ein industrielles Automatisierungsgerät bekannt, das eine Überwachungseinheit zur Überprüfung und Überwachung des Integritätszustandes des industriellen Automatisierungsgerätes umfasst. Außerdem ist zumindest eine Gerätekomponente vorgesehen, die rückwirkungsfrei über eine Kommunikationsverbindung mit der Überwachungseinheit kommuniziert. Dabei umfasst die rückwirkungsfreie Kommunikation ein Bereitstellen wenigstens eines Gerätekomponentenparameters von der Gerätekomponente an die Überwachungseinheit. Die Überwachungseinheit ist dazu ausgebildet, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten. Des Weiteren ist die Überwachungseinheit dazu ausgebildet, den Integritätszustand des industriellen Automatisierungsgerätes als Ergebnis des verarbeiteten Gerätekomponentenparameters der Gerätekomponente des industriellen Automatisierungsgerätes zu protokollieren bzw. bereitzustellen. Darüber hinaus ist die Überwachungseinheit als eine vertrauenswürdige Gerätekomponente durch einen Manipulationsschutz manipulationsgeschützt in dem industriellen Automatisierungsgerät ausgebildet.

Aus der älteren internationalen Patentanmeldung WO 2021/ 164911 A1 ist ein computergestütztes Verfahren zum Überwachen eines Integritätsstatus einer Rechenvorrichtung bekannt, bei dem zunächst ein Initialisierungswert für einen Gesamtintegritätswert festgelegt wird. Danach wird der Gesamtintegritätswert in einem vertrauenswürdigen Speicherbereich einer Speichereinheit gespeichert. Anschließend erfolgt das Ermitteln eines Integritätsstatus durch ein Integritätserkennungssystem und Erzeugen eines Integritätsstatuswertes. Danach erfolgt das Speichern des Integritätsstatuswertes in dem Gesamtintegritätswert in dem vertrauenswürdigen Speicherbereich als Integritätsstatus.

Zur Verhinderung eines Ausnutzens von bestehenden Schwachstellen in Programmcode können beispielsweise Compilerbasierte Exploit Protection Konzepte genutzt werden, die in den Programmcode während eines Kompiliervorgangs zusätzliche Schutz- bzw. Überprüfungsroutinen einfügen. Derartige Schutzkonzepte können rein Software-basiert oder mit Hardware-Unterstützung realisiert sein. Insbesondere können mit diesen Schutzkonzepten Bedrohungen wie Code Injection, Buffer Overflows, Return-oriented Programming (ROP) und Jump-oriented Programming (JOP) zur Laufzeit erkannt werden. Bei Erkennung eines potentiellen Angriffs wird beispielsweise eine Fehlermeldung in einer Kommandozeile ausgegeben oder eine Programmausführung umgehend gestoppt. Auf diese Weise wird eine Ausnutzung von bestehenden Schwachstellen erschwert. Üblicherweise werden Methoden zur Erkennung von Angriffen sowie Maßnahmen zur Reaktion auf erkannte Angriffe während des Kompiliervorgangs festgelegt und sind damit zur Laufzeit nicht mehr änderbar.

Trotz Anwendung von Schutzmaßnahmen kann eine böswillige Manipulation von Programmcode für durch industrielle Automatisierungsgeräte bereitgestellte Steuerungsanwendungen nicht immer vermieden werden. Häufig sind Patches, die auf eine Behebung von Schwachstellen im Programmcode abzielen, nicht hinreichend zeitnah zur Anwendung verfügbar oder können nicht zeitnah eingespielt werden. Insbesondere laufende technische Prozesse oder betriebliche Restriktionen in einer Anlage erlauben dies nicht zu jedem beliebigen Zeitpunkt. Zudem kann sich eine Beseitigung von Schwachstellen durch Codeanpassungen je nach verwendeter Programmiersprache mehr oder weniger kompliziert gestalten. Auch wenn viele Schutzkonzepte eine gute Balance zwischen Software-Leistung und Schutzniveau ermöglichen, kann es grundsätzlich zu Fehlalarmen (False Positives) kommen, die einen Angriff auf Programmcode signalisieren, obwohl kein Angriff vorliegt. In industriellen Automatisierungssystemen ist es äußerst problematisch, wenn Automatisierungsprozesse aufgrund solcher Fehlalarme gestoppt werden. Üblicherweise führt dies zu kostspieligen, unnötigen Unterbrechungen, Qualitätsproblemen oder gar Sicherheitsrisiken. Aufgrund dieser Probleme sind bestehende Exploit Protection Konzepte bei industriellen Automatisierungsgeräten häufig nicht anwendbar.

Der vorliegenden Erfindung liegt die Aufgabe zugrunde, ein Verfahren zur gesicherten Ausführung von Steuerungsanwendungen zu schaffen, das insbesondere bei Rückgriff auf Exploit Protection Konzepte eine erhöhte Zuverlässigkeit durch korrekt erfasste Bedrohungen und eine Vermeidung von durch Fehlalarme bedingten Ablaufunterbrechungen ermöglicht, sowie eine geeignete Implementierung zur Durchführung des Verfahrens anzugeben.

Diese Aufgabe wird erfindungsgemäß durch ein Verfahren mit den in Patentanspruch 1 angegebenen Merkmalen, durch ein System mit den in Patentanspruch 10 angegebenen Merkmalen und durch eine Überprüfungseinrichtung mit den in Patentanspruch 11 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur gesicherten Ausführung von Steuerungsanwendungen wird für zumindest eine Steuerungsanwendung zumindest ein Ereignis festgelegt, das bei einer potentiellen Manipulation von der Steuerungsanwendung zugeordnetem Programmcode bzw. zumindest eines Peripheriegeräts, das an eine den Programmcode verarbeitende Programmablaufsteuerungseinrichtung angeschlossen ist, ausgelöst wird. Die Programmablaufsteuerungseinrichtung überwacht einen Ablauf der Steuerungsanwendung auf Abweichungen von einem erwarteten Ablaufverhalten und löst bei einer Abweichung das festgelegte Ereignis aus. Dabei kann das Ereignis insbesondere eine Benennung einer Codestelle innerhalb des Programmcodes, eines Eintrittszeitpunkts des festgelegten Ereignisses, einer Ereignisart bzw. einer Fehlerart umfassen.

Erfindungsgemäß wird der Programmcode nach Auslösung des festgelegten Ereignisses weiter durch die Programmablaufsteuerungseinrichtung verarbeitet, und das Ereignis wird an eine von der Programmablaufsteuerungseinrichtung separierte Überprüfungseinrichtung gemeldet. Bei Meldung des Ereignisses analysiert die Überprüfungseinrichtung das Ablaufverhalten der Steuerungsanwendung sowie zu dieser in einem Abhängigkeitsverhältnis stehende Steuerungskomponenten anhand aktualisierbarer Prüfregeln. Die Prüfregeln werden unabhängig vom Ablauf der Steuerungsanwendung aktualisiert. Vorzugsweise analysiert die Überprüfungseinrichtung Manipulationen des der Steuerungsanwendung zugeordneten Programmcodes und der zu dieser im Abhängigkeitsverhältnis stehende Steuerungskomponenten in Kombination. Darüber hinaus kann die Überprüfungseinrichtung das Ablaufverhalten der Steuerungsanwendung sowie die zu dieser im Abhängigkeitsverhältnis stehenden Steuerungskomponenten vorteilhafterweise abhängig von einem Betriebszustand der Programmablaufsteuerungseinrichtung bzw. von zumindest einem ausgewählten Zustand analysieren.

Bei Erkennung eines entsprechend den Prüfregeln unzulässigen Ablaufverhaltens der Steuerungsanwendung überführt die Überprüfungseinrichtung die Steuerungsanwendung und die zu dieser im Abhängigkeitsverhältnis stehenden Steuerungskomponenten erfindungsgemäß in einen vordefinierten sicheren Betriebszustand. Dies bietet als Vorteil, dass insbesondere auf industriellen Automatisierungsgeräten ablaufende Software vor Angriffen zuverlässig geschützt werden kann, jedoch dafür nicht unmittelbar angehalten werden muss. Vielmehr kann zunächst sichergestellt werden, dass ein Angriff nicht fälschlicherweise als solcher erkannt wird. Damit können in Verdachtsfällen bei potentiell sicherheitskritischen Fehlermeldungen kontrollierte Maßnahmen eingeleitet werden. Dadurch wird ermöglicht, ein gesteuertes technisches System kontrolliert herunterzufahren, auf kontrollierte Weise in einem eingeschränkten Betriebsmodus (fall operational) weiter zu betreiben oder kontrolliert in einen betriebssicheren Fehler-Betriebszustand (fall safe) zu versetzen. Durch eine an die Überprüfungseinrichtung ausgelagerte Analyse eines möglichen Angriffs, können die Prüfregeln insbesondere während einer Testphase zuverlässig angelernt bzw. definiert werden. Eine Anpassung der Software selbst ist nicht notwendig. Insgesamt können erkannte potentielle Angriffe durch die an die Überprüfungseinrichtung ausgelagerte Analyse mit einer deutlich höheren Wahrscheinlichkeit korrekt bewertet werden.

Der Programmcode der Steuerungsanwendung wird erfindungsgemäß mittels eines ersten Compile Flags erstellt. Durch das erste Compile Flag wird im Programmcode zumindest eine Codesequenz zur Durchführung von Überprüfungen bei indirekten Funktionssprüngen aktiviert, wobei die Überprüfungen bei jedem Ablauf der Steuerungsanwendung durchgeführt werden. Durch die Überprüfungen werden bei Funktionsaufrufen jeweils ein Funktionsprototyp einer aufgerufenen Funktion überprüft. Funktionsprototypen umfassen insbesondere Anzahl und Typ von Aufrufparametern und Rückgabewerten.

Vorzugsweise umfasst der vordefinierte sichere Betriebszustand ein Stoppen der Steuerungsanwendung, ein Stoppen der zur Steuerungsanwendung im Abhängigkeitsverhältnis stehenden Steuerungskomponenten, ein Aktivieren eines Fehler-Betriebsmodus eines mittels der Steuerungsanwendung implementierten industriellen Automatisierungsgeräts bzw. eine Meldung eines Alarms an einen Betreiber eines das Automatisierungsgerät umfassenden industriellen Automatisierungssystems. Alternativ oder zusätzlich kann im vordefinierten sicheren Betriebszustand eine Rekonfiguration einer Ausgabeschittstelle, insbesondere eine Aktivierung eines Fail-Safe-Modus, vorgenommen werden. Darüber hinaus können die Steuerungsanwendung und die zu dieser im Abhängigkeitsverhältnis stehenden Steuerungskomponenten durch eine Überführung in den vordefinierten sicheren Betriebszustand innerhalb einer festgelegten Zeitdauer nach der Meldung des Ereignisses gestoppt werden.

Entsprechend einer weiteren bevorzugten Ausgestaltung der vorliegenden Erfindung wird der Programmcode der Steuerungsanwendung mittels eines zweiten Compile Flags erstellt. Durch das zweite Compile Flag wird im Programmcode zumindest eine Codesequenz aktiviert, durch welche die Programmablaufsteuerungseinrichtung veranlasst wird, den Programmcode der Steuerungsanwendung bei einer Abweichung des Ablaufs der Steuerungsanwendung vom erwarteten Ablaufverhalten bis auf Weiteres zu verarbeiten. Dabei sind eine Ausgabe und Verarbeitung von Fehlermeldungen weiterhin möglich.

Vorteilhafterweise werden während eines Betriebs der Steuerungsanwendung in einer gesicherten Umgebung von der Programmablaufsteuerungseinrichtung ausgelöste Ereignisse durch die Überprüfungseinrichtung als falsch positive Alarme angelernt, die bei der Meldung eines entsprechenden Ereignisses nach Beendigung des Betriebs in der gesicherten Umgebung von der Überprüfungseinrichtung zu ignorieren sind. Somit können die Prüfregeln entsprechend den angelernten falsch positiven Alarmen erstellt bzw. aktualisiert werden. Darüber hinaus können in einer Anlernphase an die Überprüfungseinrichtung gemeldete Ereignisse entsprechend Anwenderinteraktion selektiv als kritisch oder unkritisch klassifiziert werden. Dementsprechend können die Prüfregeln entsprechend einer Klassifizierung der Ereignisse zuverlässig als kritisch oder unkritisch erstellt bzw. aktualisiert werden.

Das erfindungsgemäße System ist zur Durchführung eines Verfahrens entsprechend vorangehenden Ausführungen vorgesehen und umfasst zumindest eine Programmablaufsteuerungseinrichtung sowie eine von der Programmablaufsteuerungseinrichtung separierte Überprüfungseinrichtung. Die Programmablaufsteuerungseinrichtung ist dafür ausgestaltet, Steuerungsanwendungen jeweils zugeordneten Programmcode zu verarbeiten und für zumindest eine Steuerungsanwendung zumindest ein Ereignis festzulegen, das bei einer potentiellen Manipulation von der Steuerungsanwendung zugeordnetem Programmcode bzw. zumindest eines Peripheriegeräts, das an eine den Programmcode verarbeitende Programmablaufsteuerungseinrichtung angeschlossen ist, ausgelöst wird.

Die Programmablaufsteuerungseinrichtung ist erfindungsgemäß zusätzlich dafür ausgestaltet, einen Ablauf der Steuerungsanwendung auf Abweichungen von einem erwarteten Ablaufverhalten zu überwachen, bei einer Abweichung das festgelegte Ereignis auszulösen, den Programmcode nach Auslösung des festgelegten Ereignisses weiter zu verarbeiten und das Ereignis an die Überprüfungseinrichtung zu melden. Demgegenüber ist die Überprüfungseinrichtung dafür ausgestaltet, bei Meldung des Ereignisses das Ablaufverhalten der Steuerungsanwendung sowie zu dieser in einem Abhängigkeitsverhältnis stehende Steuerungskomponenten anhand aktualisierbarer Prüfregeln zu analysieren. Zusätzlich ist die Überprüfungseinrichtung dafür ausgestaltet, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen.

Die erfindungsgemäße Überprüfungseinrichtung ist für ein System entsprechend vorangehenden Ausführungen vorgesehen und dafür ausgestaltet, bei Meldung eines festgelegten, durch eine Programmablaufsteuerungseinrichtung bei einer potentiellen Manipulation von einer Steuerungsanwendung zugeordnetem Programmcode ausgelösten Ereignisses ein Ablaufverhalten der Steuerungsanwendung sowie zu dieser in einem Abhängigkeitsverhältnis stehende Steuerungskomponenten anhand aktualisierbarer Prüfregeln zu analysieren. Zusätzlich ist die Überprüfungseinrichtung dafür ausgestaltet, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen.

Die vorliegende Erfindung wird nachfolgend an einem Ausführungsbeispiel anhand der Zeichnung näher erläutert. Es zeigt
- Figur 1: ein industrielles Automatisierungssystem mit mehreren jeweils zumindest eine Steuerungsanwendung bereitstellenden Programmablaufsteuerungseinrichtungen und mit einer Überprüfungseinrichtung zur Analyse von durch die Programmablaufsteuerungseinrichtungen gemeldeten potentiellen Manipulationsversuchen,
- Figur 2: eine schematische Darstellung eines Meldungsverkehrs zwischen mehreren Programmablaufsteuerungseinrichtungen und der Überprüfungseinrichtung bei potentiellen Manipulationsversuchen.

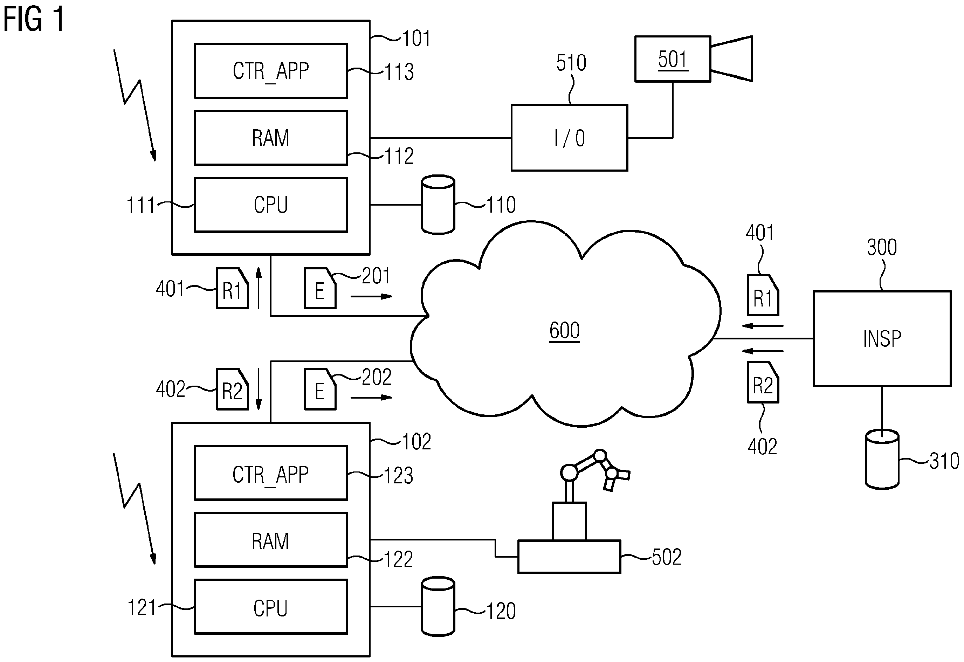

Das in Figur 1 dargestellte industrielle Automatisierungssystem umfasst mehrere jeweils ein Automatisierungsgerät implementierende Programmablaufsteuerungseinrichtungen 101-102 sowie eine separate Überprüfungseinrichtung 300 zur Analyse von Meldungen 201-202 der Programmablaufsteuerungseinrichtungen 101-102 über potentielle Manipulationsversuche. Die Programmablaufsteuerungseinrichtungen 101-102 und die Überprüfungseinrichtung 300 sind über ein industrielles Kommunikationsnetz 600 miteinander verbunden, das vorzugsweise als Time-Sensitive Network ausgestaltet ist, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Eine Weiterleitung von zeitkritischen Daten innerhalb des Kommunikationsnetzes 600 kann beispielsweise mittels Frame Preemption gemäß IEEE 802.1Q-2018, Time-Aware Shaper gemäß IEEE 802.1Q-2018, Credit-based Shaper gemäß IEEE 802.1Q-2018, Burst Limiting Shaper, Peristaltic Shaper bzw. Priority-based gesteuert werden.

Automatisierungsgeräte können insbesondere als speicherprogrammierbaren Steuerungen, Bedien- und Beobachtungsstationen, I/O-Controller oder I/O-Module ausgestaltet sein. Bedien- und Beobachtungsstationen dienen beispielsweise zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere können Bedien- und Beobachtungsstationen zur Anzeige von Werten eines Regelungskreises und zur Veränderung von Regelungsparametern verwendet werden. Bedien- und Beobachtungsstationen umfassen zumindest eine graphische Benutzerschnittstelle, ein Eingabegerät, eine Prozessoreinheit und ein Kommunikationsmodul.

Im vorliegenden Ausführungsbeispiel implementieren die Progranunablaufsteuerungseinrichtungen 101-102 jeweils eine speicherprogrammierbare Steuerung. Speicherprogrammierbare Steuerungen umfassen typischerweise jeweils einen Prozessor 111, 121 zur Verarbeitung von Programmcode für Steuerungsanwendungen 113, 123, einen Arbeitsspeicher 112, 122 zum Laden des Programmcodes, ein Kommunikationsmodul sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 101, 102 und einer durch die speicherprogrammierbare Steuerung 101, 102 gesteuerten Maschine oder Vorrichtung 501, 502. Die Steuerungsanwendungen sind insbesondere für eine Ermittlung geeigneter Steuerungsgrößen aus erfassten Messgrößen vorgesehen.

Zum Austausch von Steuerungs- und Messgrößen mit angeschlossenen Maschinen oder Vorrichtungen 501, 502 können grundsätzlich auch separate I/O-Module 510 vorgesehen sein. Eine Steuerung von I/O-Modulen kann insbesondere mittels eines I/O-Controllers pro Automatisierungszelle erfolgen. Alternativ hierzu können I/O-Module auch durch eine zugeordnete speicherprogrammierbare Steuerung angesteuert werden.

Im vorliegenden Ausführungsbeispiel wird zur gesicherten Ausführung der durch die Programmablaufsteuerungseinrichtungen 101, 102 bereitgestellten Steuerungsanwendungen 113, 123 pro Steuerungsanwendung 113, 123 zumindest ein Ereignis definiert und in einer Konfigurationsdatenbasis 110, 120 festgehalten, das bei einer potentiellen Manipulation von der jeweiligen Steuerungsanwendung 113, 123 zugeordnetem Programmcode bzw. eines Peripheriegeräts 510, das an eine Programmablaufsteuerungseinrichtung angeschlossen ist, ausgelöst wird. Ein solches Peripheriegerät ist im vorliegenden Ausführungsbeispiel das an die Programmablaufsteuerungseinrichtung 101 angeschlossene I/O-Modul 510. Die Anwendung der vorliegenden Erfindung ist jedoch keinesfalls auf diese Art von Peripheriegeräten beschränkt.

Die Programmablaufsteuerungseinrichtung 101, 102 überwachen jeweils einen Ablauf ihrer jeweiligen Steuerungsanwendung 113, 123 auf Abweichungen von einem erwarteten Ablaufverhalten und lösen bei einer Abweichung das jeweilige festgelegte Ereignis aus. Das jeweilige festgelegte Ereignis kann insbesondere eine Benennung einer Codestelle innerhalb des Programmcodes, eines Eintrittszeitpunkts des festgelegten Ereignisses, einer Ereignisart, einer Fehlerart bzw. einer Fehlerhäufigkeit umfassen. Abhängig von diesen Informationen und insbesondere aufgrund von Erfahrungen aus vorhergehenden gemeldeten Ereignissen kann die Überprüfungseinrichtung 300 entscheiden, ob ein Ereignis kritisch ist und weitere Maßnahmen zur Risikoeindämmung erforderlich sind, beispielsweise ein Stoppen der jeweiligen Steuerungsanwendung 113, 123.

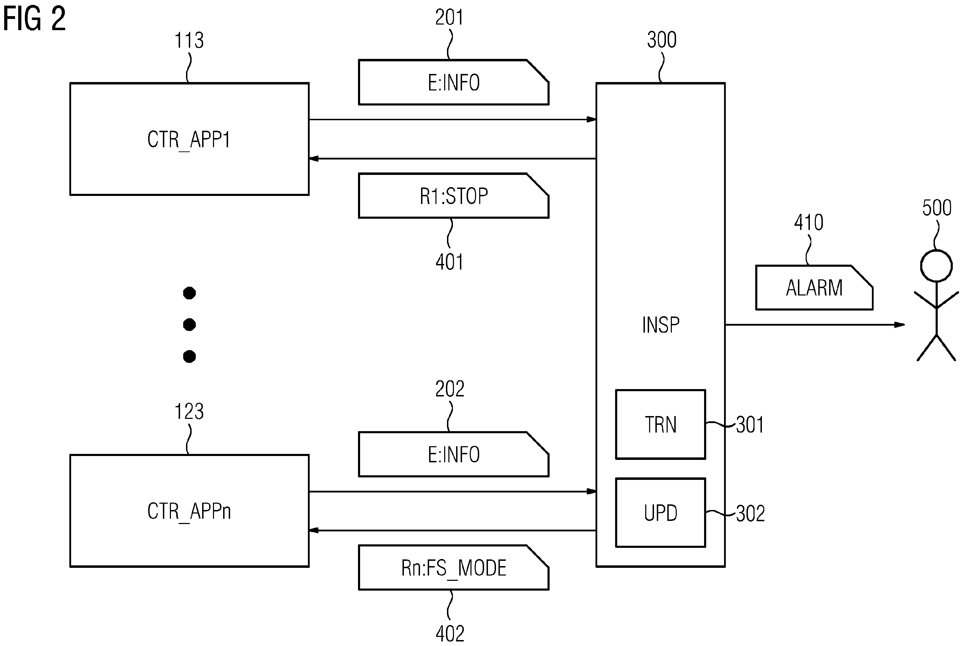

Nach Auslösung des jeweiligen festgelegten Ereignisses wird der Programmcode jeweils weiter durch die Programmablaufsteuerungseinrichtungen 101, 102 verarbeitet und das Ereignis an die Überprüfungseinrichtung 300 gemeldet. Dabei wird jeweils eine Meldung 201, 202 über eine Auslösung des jeweiligen festgelegten Ereignisses an die Überprüfungseinrichtung 300 übermittelt (siehe auch Figur 2).

Bei Meldung des jeweiligen festgelegten Ereignisses analysiert die Überprüfungseinrichtung 300 das Ablaufverhalten der jeweiligen Steuerungsanwendung 113, 123 sowie zu dieser in einem Abhängigkeitsverhältnis stehende Steuerungskomponenten, beispielsweise das I/O-Modul 510, anhand aktualisierbarer Prüfregeln, die einer Regeldatenbasis 310 der Überprüfungseinrichtung 300 hinterlegt sind. Die Prüfregeln können unabhängig vom Ablauf der jeweiligen Steuerungsanwendung 113, 123 aktualisiert werden. Hierzu weist die Überprüfungseinrichtung 300 ein Update-Modul 302 auf (siehe Figur 2).

Bei Erkennung eines entsprechend den Prüfregeln unzulässigen Ablaufverhaltens der jeweiligen Steuerungsanwendung überführt die Überprüfungseinrichtung 300 die Steuerungsanwendung 113, 123 und die zu dieser im Abhängigkeitsverhältnis stehenden Steuerungskomponenten in einen vordefinierten sicheren Betriebszustand. Hierzu übermittelt die Überprüfungseinrichtung 300 jeweils eine entsprechende Meldung 401, 402 mit einer Steuerungssequenz an die jeweilige Steuerungsanwendung 113, 123 bzw. Programmablaufsteuerungseinrichtung 101, 102. Vorteilhafterweise analysiert die Überprüfungseinrichtung 300 Manipulationen des der jeweiligen Steuerungsanwendung 113, 123 zugeordneten Programmcodes und der zu dieser im Abhängigkeitsverhältnis stehende Steuerungskomponenten in Kombination. Darüber hinaus analysiert die Überprüfungseinrichtung 300 das Ablaufverhalten der jeweiligen Steuerungsanwendung 113, 123 sowie die zu dieser im Abhängigkeitsverhältnis stehenden Steuerungskomponenten vorzugsweise abhängig von einem Betriebszustand der jeweiligen Programmablaufsteuerungseinrichtung 101, 102 bzw. von zumindest einem ausgewählten Zustand.

Der vordefinierte sichere Betriebszustand kann insbesondere ein Stoppen der Steuerungsanwendung 113, 123, ein Stoppen der zur Steuerungsanwendung 113, 123 im Abhängigkeitsverhältnis stehenden Steuerungskomponenten, beispielsweise des I/O-Moduls 510, ein Aktivieren eines Fehler-Betriebsmodus eines mittels der Steuerungsanwendung implementierten industriellen Automatisierungsgeräts bzw. eine Meldung 410 eines Alarms an einen Betreiber 500 des industriellen Automatisierungssystems umfassen (siehe Figur 2). Alternativ oder zusätzlich können die jeweilige Steuerungsanwendung 113, 123 und die zu dieser im Abhängigkeitsverhältnis stehenden Steuerungskomponenten durch eine Überführung in den vordefinierten sicheren Betriebszustand innerhalb einer festgelegten Zeitdauer nach der Meldung des Ereignisses gestoppt werden.

Entsprechend einer bevorzugten Ausführungsform wird der Programmcode für die Steuerungsanwendungen 113, 123 jeweils mittels eines ersten Compile Flags erstellt. Durch ein solches erstes Compile Flag, beispielsweise "-fsanitize=cfi" beim Clang compiler, im Programmcode wird jeweils eine Codesequenz zur Durchführung von Überprüfungen bei indirekten Funktionssprüngen aktiviert, wobei die Überprüfungen bei jedem Ablauf der jeweiligen Steuerungsanwendung 113, 123 durchgeführt werden. Durch die Überprüfungen wird bei Funktionsaufrufen insbesondere jeweils ein Funktionsprototyp einer aufgerufenen Funktion überprüft. Zusätzlich kann der Programmcode der jeweiligen Steuerungsanwendung 113, 123 jeweils mittels eines zweiten Compile Flags erstellt werden. Durch dieses zweite Compile Flag, beispielsweise "-fsanitize-recover=all" beim Clang Compiler, wird im Programmcode jeweils eine Codesequenz aktiviert, durch welche die Programmablaufsteuerungseinrichtung veranlasst wird, den Programmcode der jeweiligen Steuerungsanwendung 113, 123 bei einer Abweichung des Ablaufs der Steuerungsanwendung vom erwarteten Ablaufverhalten bis auf Weiteres zu verarbeiten.

Entsprechend Figur 2 umfasst die Überprüfungseinrichtung 300 neben dem Update-Modul 302 ein Trainings- oder Lernmodul 301. Mittels dieses Trainings- oder Lernmoduls 301 werden während eines Betriebs der jeweiligen Steuerungsanwendung 113, 123 in einer gesicherten Umgebung von der jeweiligen Programmablaufsteuerungseinrichtung 101, 102 ausgelöste Ereignisse durch die Überprüfungseinrichtung als falsch positive Alarme angelernt, die bei der Meldung eines entsprechenden Ereignisses nach Beendigung des Betriebs in der gesicherten Umgebung von der Überprüfungseinrichtung zu ignorieren sind. Die Prüfregeln werden dann entsprechend den angelernten falsch positiven Alarmen erstellt bzw. aktualisiert. Darüber hinaus können in einer Anlernphase an die Überprüfungseinrichtung 300 gemeldete Ereignisse entsprechend Anwenderinteraktion selektiv als kritisch oder unkritisch klassifiziert werden. Entsprechend einer Klassifizierung der Ereignisse als kritisch oder unkritisch werden die Prüfregeln dann erstellt bzw. aktualisiert.

Die Überprüfungseinrichtung 300 kann unterschiedliche Realisierungsformen annehmen, nämlich als integrierte, eigene Softwarekomponente auf einer Programmablaufsteuerungseinrichtung, als Komponente auf einem externen Gerät, das über eine I/O-Schnittstelle verbunden ist oder als Implementierung auf einem externen Server, beispielsweise einem Edge oder Cloud Computing Server.

Zur Aktualisierung der Prüfregeln für die Überprüfungseinrichtung 300 sind grundsätzlich noch weitere Ausführungsvarianten möglich:
- Die Anlernphase kann von einem Entwickler begleitet werden, der Fehler genauer analysiert und die Prüfregeln dementsprechend definiert bzw. aktualisiert.
- Die Überprüfungseinrichtung kann für eine Aktualisierung der Prüfregeln Verfahren anwenden, die auf künstlicher Intelligenz oder maschinellem Lernen basieren. Durch eine Analyse von häufigen, gleichen Fehler-Ereignissen eines oder mehrerer Binärdateien und insbesondere abhängig von Analysen nachfolgender Ereignisse, lernt die Überprüfungseinrichtung hinzu und passt dementsprechend ihre Überprüfungsregeln an. Damit ist ein Anlernen hin zu einer korrekten Analyse möglich.
- In Analysen der Überprüfungseinrichtung und in gegebenenfalls aktualisierte Prüfregeln kann vorteilhafterweise berücksichtigt werden, in welcher Umgebung die jeweilige Steuerungsanwendung bereitgestellt wird.
- Analysen kann vorteilhafterweise abhängig von einer Stelle eines Fehlerauftretens erfolgen. Beispielsweise erfolgt keine Reaktion, wenn ein Fehler in einem weniger kritischen Codesegment auftritt. Bei Codesegmenten mit kritischen Teilen, wie Funktionen für einen Netzwerkprotokoll-Stack, kann ein Fehler als kritisch angenommen werden und eine adäquate Maßnahme eingeleitet werden.
- In einer Whitelist für die Überprüfungseinrichtung kann darüber hinaus definiert werden, welche Fehler unkritisch sind und ignoriert werden können. Derartige Whitelists werden vorzugsweise ebenfalls aktualisiert.
- Ein Anlernen der Prüfregeln für die Überprüfungseinrichtung auf False Positives kann vor Produktivsetzung beispielsweise auch in einem digitalen Zwilling simuliert und optimiert werden.

## Patentansprüche

1. Verfahren zur gesicherten Ausführung von Steuerungsanwendungen, bei dem
- für zumindest eine Steuerungsanwendung (113, 123) zumindest ein Ereignis festgelegt wird, das bei einer potentiellen Manipulation von der Steuerungsanwendung zugeordnetem Programmcode und/oder zumindest eines Peripheriegeräts (510), das an eine den Programmcode verarbeitende Programmablaufsteuerungseinrichtung (101, 102) angeschlossen ist, ausgelöst wird,
- die Programmablaufsteuerungseinrichtung einen Ablauf der Steuerungsanwendung auf Abweichungen von einem erwarteten Ablaufverhalten überwacht und bei einer Abweichung das festgelegte Ereignis auslöst,
- der Programmcode nach Auslösung des festgelegten Ereignisses weiter durch die Programmablaufsteuerungseinrichtung verarbeitet wird und das Ereignis an eine von der Programmablaufsteuerungseinrichtung separierte Überprüfungseinrichtung (300) gemeldet wird,
- die Überprüfungseinrichtung bei Meldung (201, 202) des Ereignisses das Ablaufverhalten der Steuerungsanwendung sowie zu dieser in einem Abhängigkeitsverhältnis stehende Steuerungskomponenten anhand aktualisierbarer Prüfregeln analysiert, wobei die Prüfregeln unabhängig vom Ablauf der Steuerungsanwendung aktualisiert werden,
- die Überprüfungseinrichtung die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand überführt (401, 402),
- der Programmcode der Steuerungsanwendung mittels eines ersten Compile Flags erstellt wird, durch das im Programmcode zumindest eine Codesequenz zur Durchführung von Überprüfungen bei indirekten Funktionssprüngen aktiviert wird,
- die Überprüfungen, durch die bei Funktionsaufrufen jeweils ein Funktionsprototyp einer aufgerufenen Funktion überprüft wird, bei jedem Ablauf der Steuerungsanwendung durchgeführt werden.

2. Verfahren nach Anspruch 1,
bei dem das Ereignis eine Benennung einer Codestelle innerhalb des Programmcodes, eines Eintrittszeitpunkts des festgelegten Ereignisses, einer Ereignisart und/oder einer Fehlerart umfasst.

3. Verfahren nach einem der Ansprüche 1 oder 2,
bei dem der vordefinierte sichere Betriebszustand ein Stoppen der Steuerungsanwendung, ein Stoppen der zur Steuerungsanwendung im Abhängigkeitsverhältnis stehenden Steuerungskomponenten, ein Aktivieren eines Fehler-Betriebsmodus eines mittels der Steuerungsanwendung implementierten industriellen Automatisierungsgeräts und/oder eine Meldung eines Alarms an einen Betreiber eines das Automatisierungsgerät umfassenden industriellen Automatisierungssystems umfasst.

4. Verfahren nach einem der Ansprüche 1 bis 3,
bei dem die Steuerungsanwendung und die zu dieser im Abhängigkeitsverhältnis stehenden Steuerungskomponenten durch eine Überführung in den vordefinierten sicheren Betriebszustand innerhalb einer festgelegten Zeitdauer nach der Meldung des Ereignisses gestoppt werden.

5. Verfahren nach einem der Ansprüche 1 bis 4,
bei dem die Überprüfungseinrichtung Manipulationen des der Steuerungsanwendung zugeordneten Programmcodes und der zu dieser im Abhängigkeitsverhältnis stehende Steuerungskomponenten in Kombination analysiert.

6. Verfahren nach einem der Ansprüche 1 bis 5,
bei dem die Überprüfungseinrichtung das Ablaufverhalten der Steuerungsanwendung sowie die zu dieser im Abhängigkeitsverhältnis stehenden Steuerungskomponenten abhängig von einem Betriebszustand der Programmablaufsteuerungseinrichtung und/oder von zumindest einem ausgewählten Zustand analysiert.

7. Verfahren nach einem der Ansprüche 1 bis 6,
bei dem der Programmcode der Steuerungsanwendung mittels eines zweiten Compile Flags erstellt wird und bei dem durch das zweite Compile Flag im Programmcode zumindest eine Codesequenz aktiviert wird, durch welche die Programmablaufsteuerungseinrichtung veranlasst wird, den Programmcode der Steuerungsanwendung bei einer Abweichung des Ablaufs der Steuerungsanwendung vom erwarteten Ablaufverhalten bis auf Weiteres zu verarbeiten.

8. Verfahren nach einem der Ansprüche 1 bis 7,
bei dem während eines Betriebs der Steuerungsanwendung in einer gesicherten Umgebung von der Programmablaufsteuerungseinrichtung ausgelöste Ereignisse durch die Uberprüfungseinrichtung als falsch positive Alarme angelernt werden, die bei der Meldung eines entsprechenden Ereignisses nach Beendigung des Betriebs in der gesicherten Umgebung von der Überprüfungseinrichtung zu ignorieren sind, und bei dem die Prüfregeln entsprechend den angelernten falsch positiven Alarmen erstellt und/oder aktualisiert werden.

9. Verfahren nach einem der Ansprüche 1 bis 8,
bei dem in einer Anlernphase an die Überprüfungseinrichtung gemeldete Ereignisse entsprechend Anwenderinteraktion selektiv als kritisch oder unkritisch klassifiziert werden und bei dem die Prüfregeln entsprechend einer Klassifizierung der Ereignisse als kritisch oder unkritisch erstellt und/oder aktualisiert werden.

10. System zur Durchführung eines Verfahrens nach einem der Ansprüche 1 bis 9, wobei
- das System zumindest eine Programmablaufsteuerungseinrichtung und eine von der Programmablaufsteuerungseinrichtung separierte Überprüfungseinrichtung umfasst,
- die Programmablaufsteuerungseinrichtung dafür ausgestaltet ist, Steuerungsanwendungen jeweils zugeordneten Programmcode zu verarbeiten und für zumindest eine Steuerungsanwendung zumindest ein Ereignis festzulegen, das bei einer potentiellen Manipulation von der Steuerungsanwendung zugeordnetem Programmcode und/oder zumindest eines Peripheriegeräts, das an eine den Programmcode verarbeitende Programmablaufsteuerungseinrichtung angeschlossen ist, ausgelöst wird, wobei der Programmcode der Steuerungsanwendung mittels eines ersten Compile Flags erstellt wird, durch das im Programmcode zumindest eine Codesequenz zur Durchführung von Überprüfungen bei indirekten Funktionssprüngen aktiviert wird,
- die Programmablaufsteuerungseinrichtung zusätzlich dafür ausgestaltet ist, einen Ablauf der Steuerungsanwendung auf Abweichungen von einem erwarteten Ablaufverhalten zu überwachen, bei einer Abweichung das festgelegte Ereignis auszulösen, den Programmcode nach Auslösung des festgelegten Ereignisses weiter zu verarbeiten und das Ereignis an die Überprüfungseinrichtung zu melden,
- die Überprüfungseinrichtung dafür ausgestaltet ist, bei Meldung des Ereignisses das Ablaufverhalten der Steuerungsanwendung sowie zu dieser in einem Abhängigkeitsverhältnis stehende Steuerungskomponenten anhand aktualisierbarer Prüfregeln zu analysieren, wobei die Prüfregeln unabhängig vom Ablauf der Steuerungsanwendung aktualisiert werden,
- die Überprüfungseinrichtung zusätzlich dafür ausgestaltet ist, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen und die Überprüfungen, durch die bei Funktionsaufrufen jeweils ein Funktionsprototyp einer aufgerufenen Funktion überprüft wird, bei jedem Ablauf der Steuerungsanwendung durchzuführen.

11. Überprüfungseinrichtung für ein System nach Anspruch 10, wobei
- die Überprüfungseinrichtung dafür ausgestaltet ist, bei Meldung eines festgelegten, durch eine Programmablaufsteuerungseinrichtung bei einer potentiellen Manipulation von einer Steuerungsanwendung zugeordnetem Programmcode ausgelösten Ereignisses ein Ablaufverhalten der Steuerungsanwendung sowie zu dieser in einem Abhängigkeitsverhältnis stehende Steuerungskomponenten anhand aktualisierbarer Prüfregeln zu analysieren, wobei die Prüfregeln unabhängig vom Ablauf der Steuerungsanwendung aktualisiert werden und der Programmcode der Steuerungsanwendung mittels eines ersten Compile Flags erstellt wird, durch das im Programmcode zumindest eine Codesequenz zur Durchführung von Überprüfungen bei indirekten Funktionssprüngen aktiviert wird,
- die Überprüfungseinrichtung zusätzlich dafür ausgestaltet ist, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen und die Überprüfungen, durch die bei Funktionsaufrufen jeweils ein Funktionsprototyp einer aufgerufenen Funktion überprüft wird, bei jedem Ablauf der Steuerungsanwendung durchzuführen.

## Claims

1. Method for the secure execution of control applications, in which
- for at least one control application (113, 123), at least one event is defined which is triggered in the event of potential manipulation of program code assigned to the control application and/or of at least one peripheral device (510) which is connected to a program flow control device (101, 102) processing the program code,
- the program flow control device monitors a flow of the control application for deviations from an expected flow behaviour and triggers the defined event in the event of a deviation,
- following triggering of the defined event, the program code continues to be processed by the program flow control device and the event is signalled to an inspection device (300) separate from the program flow control device,
- upon the signalling (201, 202) of the event, the inspection device analyses the flow behaviour of the control application and control components in a dependency relationship thereto using updatable inspection rules, the inspection rules being updated independently of the flow of the control application,
- the inspection device transfers the control application and the control components in a dependency relationship thereto to a predefined safe operating state (401, 402) on detection of a flow behaviour of the control application contravening the inspection rules,
- the program code of the control application is created by means of a first compile flag which activates at least one code sequence in the program code to carry out inspections for indirect function jumps,
- the inspections, which are each used to inspect a function prototype of a called function during function calls, are carried out during each run of the control application.

2. Method according to Claim 1,
in which the event comprises a designation of a code location within the program code, a time of occurrence of the defined event, an event type, and/or an error type.

3. Method according to either of Claims 1 and 2,
in which the predefined safe operating state comprises stopping the control application, stopping the control components in a dependency relationship to the control application, activating a fault operating mode of an industrial automation device implemented by means of the control application and/or signalling an alarm to an operator of an industrial automation system comprising the automation device.

4. Method according to any one of Claims 1 to 3,
in which the control application and the control components in a dependency relationship thereto are stopped by a transfer into the predefined safe operating state within a specified time period after the event has been signalled.

5. Method according to any one of Claims 1 to 4,
in which the inspection device analyses manipulations of the program code assigned to the control application and of the control components in a dependency relationship thereto in combination.

6. Method according to any one of Claims 1 to 5,
in which the inspection device analyses the flow behaviour of the control application and the control components in a dependency relationship thereto depending on an operating state of the program flow control device and/or on at least one selected state.

7. Method according to any one of Claims 1 to 6,
in which the program code of the control application is created by means of a second compile flag and in which the second compile flag activates at least one code sequence in the program code, by means of which the program flow control device is caused to process the program code of the control application until further notice in the event of a deviation in the flow of the control application from the expected flow behaviour.

8. Method according to any one of Claims 1 to 7,
in which events triggered by the program flow control device during operation of the control application in a secure environment are learned by the inspection device as false positives, which should be ignored by the inspection device when a corresponding event is signalled after completion of operation in the secure environment, and in which the inspection rules are created and/or updated according to the learned false positives.

9. Method according to any one of Claims 1 to 8,
in which events signalled to the inspection device in a learning phase are classified selectively as critical or non-critical according to user interaction and in which the inspection rules are created and/or updated according to a classification of the events as critical or non-critical.

10. System for carrying out a method according to any one of Claims 1 to 9, wherein
- the system comprises at least one program flow control device and an inspection device separate from the program flow control device,
- the program flow control device is designed to process program code respectively assigned to control applications and to define at least one event for at least one control application, said event being triggered in the event of potential manipulation of program code assigned to the control application and/or of at least one peripheral device which is connected to a program flow control device processing the program code, wherein the program code of the control application is created by means of a first compile flag which activates at least one code sequence in the program code to carry out inspections for indirect function jumps,
- the program flow control device is additionally designed to monitor a flow of the control application for deviations from an expected flow behaviour, to trigger the defined event in the event of a deviation, to continue to process the program code following triggering of the defined event and to signal the event to the inspection device,
- the inspection device is designed, when the event is signalled, to analyse the flow behaviour of the control application and control components in a dependency relationship thereto using updatable inspection rules, the inspection rules being updated independently of the flow of the control application,
- the inspection device is additionally designed to transfer the control application and the control components in a dependency relationship thereto into a predefined safe operating state on detection of a flow behaviour of the control application contravening the inspection rules and to carry out the inspections, which are each used to inspect a function prototype of a called function during function calls, during each run of the control application.

11. Inspection device for a system according to Claim 10, wherein
- the inspection device is designed, on the signalling of a defined event which is triggered by a program flow control device in the event of potential manipulation of program code assigned to a control application, to analyse a flow behaviour of the control application and control components in a dependency relationship thereto using updatable inspection rules, the inspection rules being updated independently of the flow of the control application, and the program code of the control application being created by means of a first compile flag which activates at least one code sequence in the program code to carry out inspections for indirect function jumps,
- the inspection device is additionally designed to transfer the control application and the control components in a dependency relationship thereto into a predefined safe operating state on detection of a flow behaviour of the control application contravening the inspection rules and to carry out the inspections, which are each used to inspect a function prototype of a called function during function calls, during each run of the control application.

## Revendications

1. Procédé d'exécution sécurisée d'applications de commande, dans lequel
- pour au moins une application (113, 123) de commande on détermine au moins un évènement, qui est déclenché lors d'une manipulation potentielle du code de programme affecté à l'application de commande et/ou au moins d'un appareil (510) périphérique, qui est raccordé à un dispositif (101, 102) de commande de déroulement de programme traitant le code de programme,
- le dispositif de commande de déroulement de programme contrôle un déroulement de l'application de commande en ce qui concerne des écarts à un comportement de déroulement escompté et s'il y a un écart déclenche l'évènement déterminé,
- le code de programme continu après le déclenchement de l'évènement déterminé à être traité par le dispositif de commande de déroulement de programme et l'évènement est annoncé à un dispositif (300) de contrôle distinct du dispositif de commande de déroulement de programme,
- le dispositif de contrôle analyse à l'annonce (201, 202) de l'évènement le comportement de déroulement de l'application de commande ainsi que des composants de commande en relation de dépendance avec elle, à l'aide de règles de contrôle pouvant être mises à jour, les règles de contrôle étant mises à jour indépendamment du déroulement de l'application de commande,
le dispositif de contrôle met (401, 402) l'application de commande et les composants de commande en relation de dépendance avec celle-ci dans un état de fonctionnement sécurisé défini à l'avance s'il y a détection d'un comportement de déroulement de l'application de commande inadmissible au regard des règles de contrôle,
- le code de programme de l'application de commande est établi au moyen d'un premier compile flag, par lequel dans le code de programme au moins une séquence de code est activée pour effectuer des contrôles s'il y a des sauts fonctionnels indirects,
- les contrôles, par lesquels, s'il y a des appels fonctionnels, respectivement un prototype fonctionnel d'une fonction appelée est contrôlé, sont effectués à chaque déroulement de l'application de commande.

2. Procédé suivant la revendication 1,
dans lequel l'évènement comprend une désignation d'un emplacement de code dans le code de programme, un instant d'entrée de l'évènement déterminé, un type d'évènement et/ou un type d'erreur.

3. Procédé suivant l'une des revendications 1 ou 2,
dans lequel l'état de fonctionnement sécurisé défini à l'avance comprend un arrêt de l'application de commande, un arrêt des composants de commande en relation de dépendance avec l'application de commande, une activation d'un mode de fonctionnement d'erreur d'un appareil d'automatisation industriel mis en oeuvre au moyen de l'application de commande et/ou un message d'une alerte à un opérateur d'un système d'automatisation industriel comprenant l'appareil d'automatisation.

4. Procédé suivant l'une des revendications 1 à 3,
dans lequel l'application de commande et les composants de commande en relation de dépendance avec celle-ci sont arrêtés par un passage dans l'état de fonctionnement sécurisé défini à l'avance dans une durée déterminée après l'annonce de l'évènement.

5. Procédé suivant l'une des revendications 1 à 4,
dans lequel le dispositif de contrôle analyse en combinaison des manipulations du code de programme affecté à l'application de commande et des composants de commande en relation de dépendance avec celle-ci.

6. Procédé suivant l'une des revendications 1 à 5,
dans lequel le dispositif de contrôle du comportement de déroulement de l'application de commande ainsi que les composants de commande en relation de dépendance avec celle-ci analyse en fonction d'un état de fonctionnement du dispositif de commande de déroulement de programme et/ou d'au moins un état sélectionné.

7. Procédé suivant l'une des revendications 1 à 6,
dans lequel le code de programme de l'application de commande est établi au moyen d'un deuxième compile flag et dans lequel par le deuxième compile flag il est activé dans le code de programme au moins une séquence de code, par laquelle le dispositif de commande de déroulement de programme fait que le code de programme de l'application de commande soit, s'il y a un écart du déroulement de l'application de commande au comportement de déroulement escompté, traité jusqu'à nouvel ordre.

8. Procédé suivant l'une des revendications 1 à 7,
dans lequel pendant un fonctionnement de l'application de commande dans un environnement sécurisé des évènements déclenchés par le dispositif de commande de déroulement de programme sont appris par le dispositif de contrôle comme des alertes faussement positives, qui, à l'annonce d'un évènement correspondant après la fin du fonctionnement dans l'environnement sécurisé, sont négligés par le dispositif de commande, et dans lequel les règles de contrôle sont établies conformément aux alertes apprises faussement positives et/ou mises à jour.

9. Procédé suivant l'une des revendications 1 à 8,
dans lequel dans une phase d'apprentissage des interactions d'utilisateur correspondant à des évènements annoncés au dispositif de contrôle sont classées sélectivement comme critiques ou non critiques, et dans lequel les règles de contrôle sont établies comme critiques ou non critiques conformément à un classement des évènements et/ou mises à jour.

10. Système pour effectuer un procédé suivant l'une des revendications 1 à 9, dans lequel
- le système comprend au moins un dispositif de commande de déroulement de programme et un dispositif de contrôle distinct du dispositif de commande de déroulement de programme,
- le dispositif de commande de déroulement de programme est conformé pour traiter des codes de programme affectés respectivement aux applications de commande et pour déterminer pour au moins une application de commande au moins un évènement, qui est déclenché lors d'une manipulation potentielle du code de programme affecté à l'application de commande et/ou au moins d'un appareil périphérique, qui est raccordé à un dispositif de commande de déroulement de programme traitant le code de programme, dans lequel le code de programme de l'application de commande est établi au moyen d'un premier compile flag, par lequel dans le code de programme au moins une séquence de code est activée pour effectuer des contrôles s'il se produit des sauts fonctionnels indirects,
- le dispositif de commande de déroulement de programme est conformé, en outre, pour contrôler un déroulement de l'application de commande du point de vue des écarts à un comportement de déroulement escompté, pour, s'il y a un écart, déclencher l'évènement déterminé, pour continuer à traiter le code de programme après le déclenchement de l'évènement déterminé, et pour annoncer l'évènement au dispositif de contrôle,
- le dispositif de contrôle est conformé pour, à l'annonce de l'évènement, analyser le comportement de déroulement de l'application de commande ainsi que de composants de commande en relation de dépendance avec elle à l'aide de règles de contrôle pouvant être mises à jour, dans lequel des règles de contrôle sont mises à jour indépendamment du déroulement de l'application de commande,
- le dispositif de contrôle est conformé, en outre, pour faire passer l'application de commande et les composants de commande en relation de dépendance avec elle, à la détection d'un comportement de déroulement inadmissible conformément aux règles de contrôle de l'application de commande, dans un état de fonctionnement sécurisé défini à l'avance et pour effectuer à chaque déroulement de l'application de commande les contrôles, par lesquels, s'il y a des appels fonctionnels, respectivement un prototype fonctionnel d'une fonction appelée est contrôlé.

11. Dispositif de contrôle d'un système suivant la revendication 10,
dans lequel
- le dispositif de contrôle est conformé pour, à l'annonce d'un évènement déterminé, déclenché par un dispositif de commande de déroulement de programme lors d'une manipulation potentielle d'un code de programme affecté à l'application de commande, analyser un comportement de déroulement de l'application de commande ainsi que de composants de commande en relation de dépendance avec elle à l'aide de règles de contrôle pouvant être mises à jour, dans lequel les règles de contrôle sont mises à jour indépendamment du déroulement de l'application de commande et le code de programme de l'application de commande est établi au moyen d'un autre compile flag, par lequel dans le code de programme au moins une séquence de code est activée pour la mise en oeuvre de contrôles s'il se produit des sauts fonctionnels indirects,
- le dispositif de contrôle est conformé, en outre, pour faire passer l'application de commande et les composants de commande en relation de dépendance avec elle, à la détection d'un comportement de déroulement inadmissible au regard des règles de contrôle de l'application de commande, dans un état de fonctionnement sécurisé défini à l'avance et pour effectuer, à chaque déroulement de l'application de commande, les règles de contrôle, par lesquelles, s'il se produit des appels fonctionnels, respectivement un prototype fonctionnel d'une fonction appelée est contrôlé.
